# EUROPEAN PATENT APPLICATION

(11) **EP 1 643 785 A1**
(43) Date of publication of application: **05.04.2006**
(21) Application number: 04292325.0
(22) Date of filing: 29.09.2004
(51) Int. Cl.: H04Q 7/38

(54) **Method of operating a radio system, radio system and radio base station**

(71) Applicant: ALCATEL, 75008 Paris (FR)
(72) Inventor: Wünstel, Klaus, Dr.rer.nat., 71701 Schwieberdingen (DE); Banniza, Thomas-Rolf, 71701 Schwieberdingen (DE); Halbauer, Hardy, 76275 Ettlingen (DE); Münzner, Roland, Dr., 73266 Bissingen/Teck (DE)
(74) Representative: Schäfer, Wolfgang

(57) **Abstract**

The present invention relates to a method of operating a radio system (100) comprising at least a first and a second radio base station (BS1, BS2) and at least one mobile station (MS), wherein a handover of said mobile station (MS) from said first radio base station (BS1) to said second radio base station (BS2) is performed. Said handover comprises the following steps:
- detecting a position of said mobile station (MS), and
- performing said handover depending on said position of said mobile station (MS).

## Description

The present invention relates to a method of operating a radio system comprising at least a first and a second radio base station and at least one mobile station, wherein a handover of said mobile station from said first radio base station to said second radio base station is performed.

The present invention further relates to a radio system according to the preamble of claim 8 and a radio base station according to the preamble of claim 10.

Although handover procedures are per se known in prior art, existing solutions have several disadvantages including lacking flexibility in that e.g. directed handovers triggered by a radio base station are not possible.

Therefore, it is an object of the present application to improve the aforementioned method, a radio system and a radio base station.

According to the present invention, concerning said method this object is achieved by detecting a position of said mobile station and by performing said handover depending on said position of said mobile station.

According to an advantageous embodiment of the present invention, said step of detecting a position of said mobile station comprises an angle determination and/or evaluating ranging information.

A further advantageous embodiment of the present invention is characterized by dynamically extending a range of said second radio base station, wherein said extending is preferably performed depending on said position information of said mobile station.

Another advantageous embodiment of the present invention is characterized by said step of dynamically extending a range of said second radio base station comprising a step of increasing a transmission power of said second radio base station, in particular for selected sub-carriers and/or antenna segments.

Yet another advantageous embodiment of the present invention proposes using adaptive array antennas for said step of dynamically extending a range of said second radio base station. Adaptive array antennas enable a modification of a beam characteristic during operation e.g. by controlling a phase of a signal delivered to each antenna being part of said array antenna.

According to a further advantageous embodiment of the present invention, said first radio base station initiates said handover.

As proposed by yet another advantageous embodiment of the present invention said inventive method is used for performing load sharing between said radio base stations. I.e. frequently used radio base stations are enabled to hand over mobile stations to preferably neighbouring radio base stations to reduce their traffic load.

This advantageously increases an overall number of mobile stations that can be served within a radio system. A further advantage of the inventive method is an improvement of the quality of service (QoS) provided within said radio system without increasing the number of radio base stations within the radio system.

Regarding the above mentioned radio base station, a further solution to the object of the present invention is given by the characterizing features of claim 10.

The inventive radio base station is characterized in that a position of said mobile station can be detected, and in that said handover can be performed depending on said position of said mobile station.

According to a further advantageous embodiment of the present invention, said radio base station is capable of performing the inventive method according to one of the claims 2 to 7.

Still another solution to the object of the present invention regarding the above mentioned radio system is given by the characterizing features of claim 8.

According to a further variant of the present invention, said radio system is capable of performing the inventive method according to one of the claims 2 to 7.

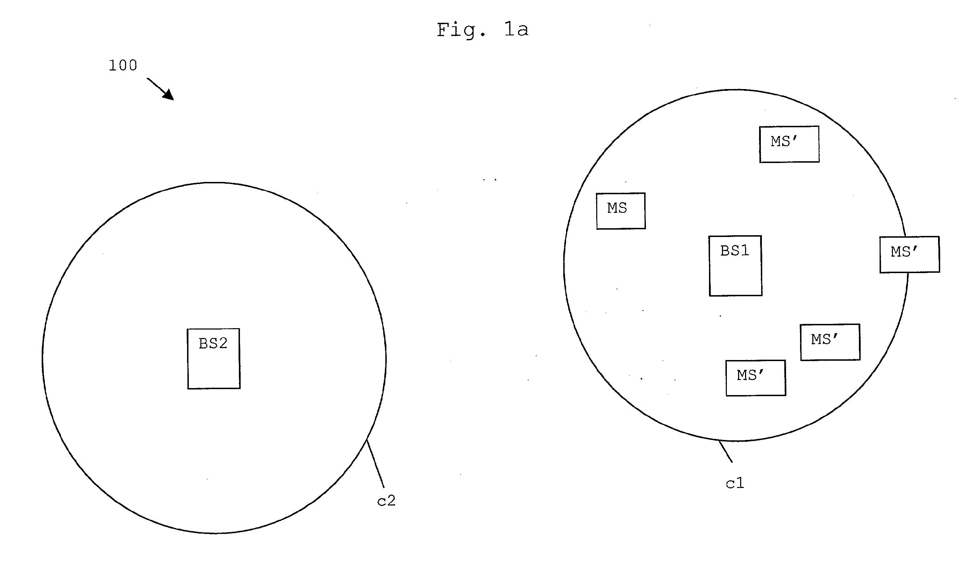

Further features and advantages of the present invention are given in the following detailed description with reference to the drawing, wherein
- Fig. 1a: depicts a first embodiment of the present invention in a first state, and

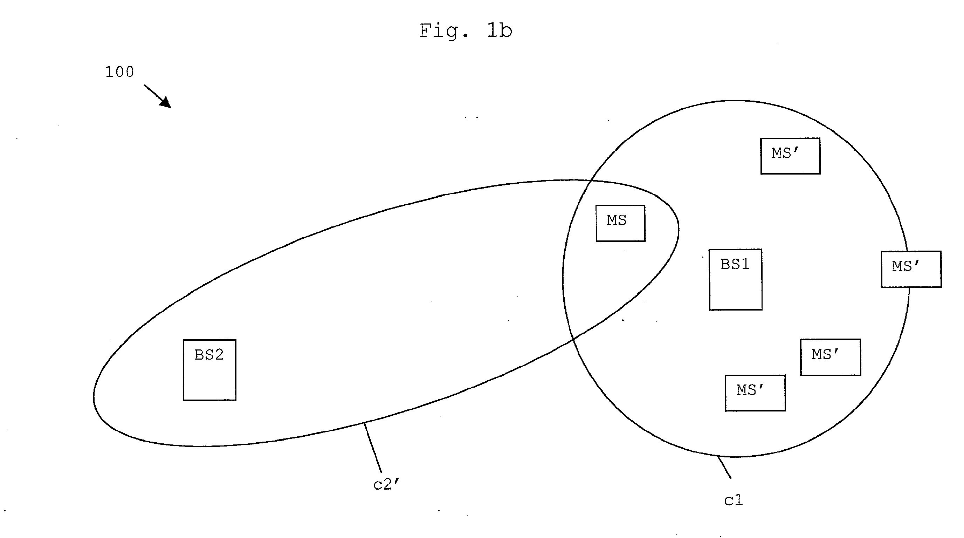

- Fig. 1b: depicts the embodiment of Fig. 1a in a second state.

The radio system 100 depicted in Fig. 1a comprises a first and a second radio base station BS1, BS2. Each of said radio base stations BS1, BS2 constitutes a radio cell c1, c2 a size of which - inter alia - depends on a radio range of the corresponding radio base station BS1, BS2. The shape of the radio cells c1, c2 is further influenced by a configuration of an antenna module (not shown) of the respective radio base station BS1, BS2.

As can be gathered from Fig. 1a, there are various mobile stations MS, MS' within the radio cell c1 of the first radio base station BS1. In order to reduce a traffic load imparted on said first radio base station BS1 by said various mobile stations MS, MS', a handover of a specific mobile station MS is performed from said first radio base station BS1 to said second radio base station BS2, which is described in detail below.

According to the scenario depicted in Fig. 1a, the radio cell c2 of said second radio base station BS2 has a circular shape and does not include the mobile station MS. Thus said mobile station MS which is to be handed over from said first radio base station BS1 to said second radio base station BS2 is out of a radio range of the second radio base station BS2. Consequently, with this radio cell configuration of said second radio base station BS2, a handover is not possible.

In order to enable the desired handover, the first radio base station BS1 detects a position of said mobile station MS and transmits information related to said position to the second radio base station BS2. Such a transmission may e.g. be performed via a control network connecting both radio base stations BS1, BS2, which is not displayed in Fig. 1a.

Detecting the position of said mobile station MS is achieved by evaluating ranging information and performing an angle determination within said first radio base station BS1. I.e., the position of said mobile station MS may be expressed by using polar coordinates denoting a distance of said mobile station MS from the first radio base station BS1 and an angle range in which the mobile station is located.

After receiving said information related to the position of the mobile station MS which is to be handed over, said second radio base station BS2 performs a dynamic range extension of its radio range by changing a beam characteristic of an antenna module (not shown) provided within said second radio base station BS2. Said antenna module comprises adaptive array antennas to enable the above described changing of the beam characteristic.

As a result, the second radio base station BS2 constitutes a radio cell c2' having a non-circular, basically elliptic beam-like shape as depicted in Fig. 1b.

The shape of said radio cell c2' is hereby controlled by said second radio base station BS2 according to the information related to the position of said mobile station MS so as to enable the establishment of a radio link between said second radio base station BS2 and said mobile station MS.

As a consequence, after the aforedescribed dynamic range extension of the second radio base station BS2, the mobile station MS is now located within a radio range of the second radio base station BS2, cf. Fig. 1b, and a corresponding radio link can be established between said mobile station MS and said second radio base station.

Finally, the desired handover of the mobile station MS from the first radio base station BS1 to the second radio base station BS2 can be conducted which leads to a reduction of the number of mobile stations MS*'* to be handled by the first radio base station BS1.

Thus, the inventive method enables to perform directed handovers which are not possible within state-of-the-art systems having a constant radio range. This way, it is possible to reduce a traffic load of highly frequented radio base stations by implementing a sophisticated load sharing wherein mobile stations are handed over to substantially unused neighbouring radio base stations.

This advantageously increases an overall number of mobile stations MS, MS*'* that can be served within the inventive radio system 100.

A further advantage of the inventive method is an improvement of the quality of service (QoS) provided within said radio system 100 without increasing the number of radio base stations within the radio system 100.

According to a further embodiment of the present invention, the shape of a radio cell of a radio base station BS2 may also be changed by increasing a transmission power of said radio base station BS2. This measure basically does not affect the circular shape of a corresponding radio cell, but a radius of said radio cell can thereby be increased.

It is also possible to combine an increase of transmission power with the aforedescribed modification of the beam characteristic of an antenna module. However, said modifications are to be performed according to said position information determined prior to the handover in order to enable a precise shaping of the radio cell so as to include the desired mobile station MS in the radio cell of the target radio base station BS2.

Furthermore, it is possible to limit the change of the shape of the radio cell to certain sub-carriers, e.g. in the case of multi-carrier modulation formats, and/or frequency ranges of said radio base station BS2. This allows to maintain a circular radio cell shape for other sub-carriers or frequency ranges, respectively, which may have been assigned to other mobile stations (not shown) within the radio range of the second radio base station BS2 prior to the described handover procedure.

Another advantageous embodiment of the present invention proposes to use the position information of a mobile station MS for providing location based services within the inventive radio system 100.

Although the inventive method is well suited to be performed within radio systems 100 operating according to the IEEE 802.16 standard, it is not limited to such radio systems. Generally, any radio system and/or base station which provides for position detection of mobile stations or which at least can receive such position information from other systems, can be operated according to the method of the present invention.

By implementing a handover procedure according to the present invention, radio system operators have an increased benefit from the dynamic resource allocation e.g. concerning said radio base stations.

## Claims

1. Method of operating a radio system (100) comprising at least a first and a second radio base station (BS1, BS2) and at least one mobile station (MS), wherein a handover of said mobile station (MS) from said first radio base station (BS1) to said second radio base station (BS2) is performed, **characterized in that** said handover comprises the following steps:
- detecting a position of said mobile station (MS) ,
- performing said handover depending on said position of said mobile station (MS).

2. Method according to claim 1, **characterized in that** said step of detecting a position of said mobile station (MS) comprises an angle determination and/or evaluating ranging information.

3. Method according to one of the preceding claims, **characterized by** dynamically extending a range of said second radio base station (BS2), preferably depending on said position information of said mobile station (MS) .

4. Method according to claim 3, **characterized by** said step of dynamically extending a range of said second radio base station (BS2) comprising a step of increasing a transmission power of said second radio base station (BS2), in particular for selected sub-carriers and/or antenna segments.

5. Method according to claim 3 or 4, **characterized by** using adaptive array antennas for said step of dynamically extending a range of said second radio base station (BS2).

6. Method according to one of the preceding claims, **characterized in that** said first radio base station (BS1) initiates said handover.

7. Method according to one of the preceding claims, **characterized by** using said method for performing load sharing between said radio base stations (BS1, BS2).

8. Radio system (100) comprising at least a first and a second radio base station (BS1, BS2) and at least one mobile station (MS), wherein a handover of said mobile station (MS) from said first radio base station (BS1) to said second radio base station (BS2) can be performed, **characterized in that** a position of said mobile station (MS) can be detected, and **in that** said handover can be performed depending on said position of said mobile station (MS).

9. Radio system (100) according to claim 8, **characterized by** being capable of performing the method according to one of the claims 2 to 7.

10. Radio base station (BS1, BS2) for a radio system (100) comprising at least a first and a second radio base station (BS1, BS2) and at least one mobile station (MS), wherein a handover of said mobile station (MS) from said first radio base station (BS1) to said second radio base station (BS2) can be performed, **characterized in that** a position of said mobile station (MS) can be detected, and **in that** said handover can be performed depending on said position of said mobile station (MS).

11. Radio base station (BS1, BS2) according to claim 10, **characterized in that** said radio base station (BS1, BS2) is capable of performing the method according to one of the claims 2 to 7.
